(19) **Europäisches Patentamt / European Patent Office / Office européen des brevets**

(11) **EP 1 940 898 B1**

(12) **EUROPEAN PATENT SPECIFICATION**

(45) Date of publication and mention
of the grant of the patent:
**15.12.2010 Bulletin 2010/50**

(21) Application number: **06793902.5**

(22) Date of filing: **29.09.2006**

(51) Int Cl.:
*C08G 18/09* (2006.01)   *C08G 18/48* (2006.01)
*C08G 18/76* (2006.01)

(86) International application number:
**PCT/EP2006/066874**

(87) International publication number:
**WO 2007/042407 (19.04.2007 Gazette 2007/16)**

(54) **PROCESS FOR PREPARING A POLYISOCYANURATE POLYURETHANE MATERIAL**

VERFAHREN ZUR HERSTELLUNG EINES POLYISOCYANURATPOLYURETHANMATERIALS

PROCEDE DE PREPARATION D'UN MATERIAU DE POLYISOCYANURATE POLYURETHANE

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.10.2005 EP 05109528**

(43) Date of publication of application:
**09.07.2008 Bulletin 2008/28**

(73) Proprietor: **HUNTSMAN INTERNATIONAL LLC Salt Lake City, Utah 84108 (US)**

(72) Inventors:
• **BLEYS, Gerhard Jozef**
  **B-3001 Heverlee (BE)**
• **HUYGENS, Eric**
  **B-3001 Heverlee (BE)**
• **ROEKAERTS, Stijn**
  **B-3211 Binkom (BE)**
• **VANDERVESSE, Marc**
  **B-3300 Tienen (BE)**
• **VERBEKE, Hans Godelieve Guido**
  **B-3210 Lubbeek (BE)**

(74) Representative: **Baken, Philippus Johannes L. H. et al**
  **Huntsman (Europe) BVBA**
  **Intellectual Property Department**
  **Everslaan 45**
  **3078 Everberg (BE)**

(56) References cited:
  **WO-A-02/06370      WO-A-02/10249**
  **WO-A-2004/111101   US-A- 4 126 741**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is related to a process for preparing a polyisocyanurate polyurethane material. More specifically the present invention is related to a process for preparing a polyisocyanurate polyurethane material using a polyether polyol having a high oxyethylene content and a polyisocyanate having a high diphenylmethane diisocyanate (MDI) content.

The preparation of polyurethane materials having a low and a high hardblock content from polyols having a high oxyethylene content, polyisocyanates comprising at least 85% by weight of 4,4'-MDI or a variant thereof and water has been disclosed in WO 02/06370 and WO 98/00450. The materials made are polyurethane elastomers. Further it has been disclosed in EP 608626 to produce shape memory polyurethane foams by reacting a polyisocyanate comprising a high amount of 4,4'-MDI and a polyol with a high oxyethylene content with water. WO 02/10249 discloses a process for preparing a polyurethane material having a high hard block content by reacting an MDI, a polyol having a high oxyethylene content and a cross-linker/chain extender.

These citations do not disclose a process for making a polyisocyanurate polyurethane material by reacting a polyisocyanate and a polyol at a high NCO-index and in the presence of a trimerisation catalyst.

Processes for making polyisocyanurate polyurethane materials, by reacting polyisocyanates and polyols at a high index in the presence of a trimerisation catalyst, as such have been widely described. See e.g. EP 922063 and WO 00/29459, WO 02/00752, EP 1173495, EP 745627, EP 587317, US 4247656, US 4129697 , DE 10145458, US 4661533, US 4424288, US 4126742, GB 1433642 and EP 1428848.

WO 05/072188 discloses a polymer matrix composite material which optionally may comprise polyisocyanurate formed by reaction of a monomeric or oligomeric poly- or di-isocyanate with water.

WO 04/111101 discloses polyisocyanurate polyurethane materials prepared from certain MDI-based polyisocyanates and certain polyols having a high oxyethylene content. The materials are prepared from polyols having a relatively low equivalent weight at an index range of 150 to 1500 and as a consequence the hardblock content of the materials made is rather high and the materials are hard and not elastomeric.

Surprisingly we have now found that by using polyols having a higher equivalent weight a material is obtainable with surprising properties.

The materials according to the present invention are elastomeric despite the fact that they are made at a high index and that they contain polyisocyanurate groups. The invention allows for the production of elastomeric materials having a low modulus, a high elongation, a good temperature- and flammability resistance, a short cure time and good mould release properties. In particular the materials can be advantageously produced according to the reaction injection moulding (RIM) process or by a casting process.

Further, the process is suitable to make reinforced materials by using fillers like organic, mineral and nano particles like carbon black particles, nanoclay particles and silicates, $BaSO_4$, $CaCO_3$ and metal oxides and/or fibers like glass fibers, natural fibers like flax, hemp and sisal fibers, synthetic fibers like polyethylene terephthalates, polyamides, polyaramides (Kevlar™), polyethylene (Spectra™) and carbon fibers.

Still further the ingredients used to make the materials are easily processable (good flow, miscibility and wettability) and exhibit excellent curing characteristics allowing for short demould times.

Still further, immediately after preparation, the materials obtained show lower levels of residual NCO groups in infra-red analysis compared to materials made from high amounts of polyols having a high level of oxypropylene groups at the same NCO-index and hardblock content. The materials according to the present invention show a higher resilience especially at the lower hardblock contents. No chain extender is needed for all these beneficial properties but can optionally be used.

Therefore the present invention is concerned with a process for preparing an elastomeric polyisocyanurate polyurethane material which process comprises reacting a polyisocyanate and an isocyanate-reactive composition wherein the reaction is conducted at an isocyanate index of 150 to 5000 and in the presence of a trimerisation catalyst, wherein the polyisocyanate comprises a) 80-100% by weight of diphenylmethane diisocyanate comprising at least 40%, preferably at least 60% and most preferably at least 85% by weight of 4,4'-diphenylmethane diisocyanate and/or a variant of said diphenylmethane diisocyanate which variant is liquid at 25°C and has an NCO value of at least 20% by weight (polyisocyanate a), and b) 20-0% by weight of another polyisocyanate (polyisocyanate b), the amount of polyisocyanate a) and polyisocyanate b) being calculated on the total amount of this polyisocyanate a) and polyisocyanate b), and wherein the isocyanate-reactive composition comprises a) 80-100% by weight of a polyether polyol having an average nominal functionality of 2-6, an average equivalent weight of 1100-5000 and an oxyethylene (EO) content of 50-90% by weight, and b) 20-0% by weight of one or more other isocyanate-reactive compounds, the amount of polyol a) and compound b) being calculated on the total amount of this polyol a) and compound b), and wherein the hardblock content is at most 49%.

Further the present invention is concerned with elastomeric polyisocyanurate polyurethane materials made according to this process and having a hardblock content of 5-45 % and preferably of 10-39 %, a Shore A hardness of 10-99 and preferably of 20-90 (DIN 53505) and an elongation of 5-1000 % and preferably of 10-1000 % (DIN 53504). Such materials are transparant, surprisingly.

In the context of the present invention the following terms have the following meaning :

1) isocyanate index or NCO index or index :

the ratio of NCO-groups over isocyanate-reactive hydrogen atoms present in a formulation, given as a percentage :

$$\frac{[NCO] \times 100}{[active\ hydrogen\ ]} \qquad (\%).$$

In other words the NCO-index expresses the percentage of isocyanate actually used in a formulation with respect to the amount of isocyanate theoretically required for reacting with the amount of isocyanate-reactive hydrogen used in a formulation.

It should be observed that the isocyanate index as used herein is considered from the point of view of the actual polymerisation process preparing the material involving the isocyanate ingredient and the isocyanate-reactive ingredients. Any isocyanate groups consumed in a preliminary step to produce modified polyisocyanates (including such isocyanate-derivatives referred to in the art as prepolymers) or any active hydrogens consumed in a preliminary step (e.g. reacted with isocyanate to produce modified polyols or polyamines) are not taken into account in the calculation of the isocyanate index. Only the free isocyanate groups and the free isocyanate-reactive hydrogens (including those of water, if used) present at the actual polymerisation stage are taken into account.

2) The expression "isocyanate-reactive hydrogen atoms" as used herein for the purpose of calculating the isocyanate index refers to the total of active hydrogen atoms in hydroxyl and amine groups present in the reactive compositions; this means that for the purpose of calculating the isocyanate index at the actual polymerisation process one hydroxyl group is considered to comprise one reactive hydrogen, one primary amine group is considered to comprise one reactive hydrogen and one water molecule is considered to comprise two active hydrogens.

3) Reaction system : a combination of components wherein the polyisocyanates are kept in one or more containers separate from the isocyanate-reactive components.

4) The expression "polyisocyanurate polyurethane material" as used herein refers to cellular or non-cellular products as obtained by reacting the mentioned polyisocyanates and isocyanate-reactive compositions in the presence of trimerization catalysts at a high index, optionally using foaming agents, including cellular products obtained with water as reactive foaming agent (involving a reaction of water with isocyanate groups yielding urea linkages and carbon dioxide and producing polyurea-polyisocyanurate-polyurethane foams) and in particular cellular products obtained with non reactive blowing agents.

5) The term "average nominal hydroxyl functionality" (or in short "functionality") is used herein to indicate the number average functionality (number of hydroxyl groups per molecule) of the polyol or polyol composition on the assumption that this is the number average functionality (number of active hydrogen atoms per molecule) of the initiator(s) used in their preparation although in practice it will often be somewhat less because of some terminal unsaturation.

6) The word "average" refers to number average unless indicated otherwise.

7) The term "hard block content" refers to 100 times the ratio of the amount (in pbw) of polyisocyanate + isocyanate-reactive materials having a molecular weight of 500 or less (wherein polyols having a molecular weight of more than 500 incorporated in the polyisocyanates are not taken into account) over the amount (in pbw) of all polyisocyanate + all isocyanate-reactive materials used.

8) The term "elastomeric material" refers to materials having an elongation of at least 5 % (DIN 53504) and at the same time a Shore A hardness of at most 99 (DIN 53505).

Preferably the polyisocyanate a) is selected from 1) a diphenylmethane diisocyanate comprising at least 40%, preferably at least 60% and most preferably at least 85% by weight of 4,4'-diphenylmethane diisocyanate (4,4'-MDI) and the following preferred variants of such diphenylmethane diisocyanate ; 2) a carbodiimide and/or uretonimine modified variant of polyisocyanate 1), the variant having an NCO value of 20% by weight or more; 3) a urethane modified variant of polyisocyanate 1), the variant having an NCO value of 20% by weight or more and being the reaction product of an excess of polyisocyanate 1) and of a polyol having an average nominal hydroxyl functionality of 2-4. and an average molecular weight of at most 1000; 4) a prepolymer having an NCO value of 20% by weight or more and which is the reaction product of an excess of any of the aforementioned polyisocyanates 1-3) and of a polyol having an average nominal hydroxyl functionality of 2-6, an average molecular weight of 2000-12000 and preferably an hydroxyl value of 15 to 60 mg KOH/g, and 5) mixtures of any of the aforementioned polyisocyanates. Polyisocyanates 1) and 2) and mixtures thereof are preferred as polyisocyanate a).

Polyisocyanate 1) comprises at least 40% by weight of 4,4'-MDI. Such polyisocyanates are known in the art and include pure 4,4'-MDI and isomeric mixtures of 4,4'-MDI and up to 60% by weight of 2,4'-MDI and 2,2'-MDI. It is to be noted that the amount of 2,2'- MDI in the isomeric mixtures is rather at an impurity level and in general will not exceed 2% by weight, the remainder being 4,4'-MDI and 2,4'-MDI. Polyisocyanates as these are known in the art and commercially available; for example Suprasec™ MPR ex Huntsman Polyurethanes, which is a business of Huntsman International LLC (who owns the Suprasec trademark).

The carbodiimide and/or uretonimine modified variants of the above polyisocyanate 1) are also known in the art and commercially available; e.g. Suprasec 2020, ex Huntsman Polyurethanes.

Urethane modified variants of the above polyisocyanate 1) are also known in the art, see e.g. The ICI Polyurethanes Book by G. Woods 1990, 2nd edition, pages 32-35. Aforementioned prepolymers of polyisocyanate 1) having an NCO value of 20% by weight or more are also known in the art. Preferably the polyol used for making these prepolymers is selected from polyester polyols and polyether polyols and especially from polyoxyethylene polyoxypropylene polyols having an average nominal hydroxyl functionality of 2-4, an average molecular weight of 2500-8000, and preferably an hydroxyl value of 15-60 mg KOH/g and preferably either an oxyethylene content of 5-25% by weight, which oxyethylene preferably is at the end of the polymer chains, or an oxyethylene content of 50-90% by weight, which oxyethylene preferably is randomly distributed over the polymer chains.

Mixtures of the aforementioned polyisocyanates may be used as well, see e.g. The ICI Polyurethanes Book by G. Woods 1990, 2nd edition pages 32-35. An example of such a commercially available polyisocyanate is Suprasec 2021 ex Huntsman Polyurethanes.

The other polyisocyanate b) may be chosen from aliphatic, cycloaliphatic, araliphatic and, preferably, aromatic polyisocyanates, such as toluene diisocyanate in the form of its 2,4 and 2,6-isomers and mixtures thereof and mixtures of diphenylmethane diisocyanates (MDI) and oligomers thereof having an isocyanate functionality greater than 2 known in the art as "crude" or polymeric MDI (polymethylene polyphenylene polyisocyanates). Mixtures of toluene diisocyanate and polymethylene polyphenylene polyisocyanates may be used as well.

When polyisocyanate are used which have an NCO functionality of more than 2, the amount of such polyisocyanate used is such that the average NCO functionality of the total polyisocyanate used in the present invention is at most 2.2 preferably.

Polyether polyol a) having a high EO content is selected from those having an EO content of 50-90 and preferably of 60-85% by weight calculated on the weight of the polyether polyol. These polyether polyols contain other oxyalkylene groups like oxypropylene and/or oxybutylene groups. These polyols have an average nominal functionality of 2-6 and more preferably of 2-4 and an average equivalent weight of 1100-5000 and preferably of 1200-4000 and most preferably of 1800-3500. The polyol may have a random distribution of the oxyalkylene groups, a block copolymer distribution or a combination thereof. Mixtures of polyols may be used. Methods to prepare such polyols are generally known. An example of such polyols is Daltocel® 555 ex Huntsman.

The other isocyanate-reactive compounds b), which may be used in an amount of 0-20% by weight and preferably of 0-10% by weight, calculated on the amount of polyol a) and this compound b), may be selected from chain extenders, cross-linkers; polyether polyamines, polyols different from polyol a), and water.

The isocyanate-reactive chain extenders, which contain 2 isocyanate-reactive hydrogen atoms, may be selected from amines, amino-alcohols and polyols; preferably polyols are used. Further the chain extenders may be aromatic, cycloaliphatic, araliphatic and aliphatic; preferably aliphatic ones are used. The chain extenders preferably have an average equivalent weight of less than 150. Most preferred are aliphatic diols such as ethylene glycol, 1,3-propanediol, 2-methyl-1,3-propanediol, 1,4-butanediol, 1,5-pentanediol, 1,6-hexanediol, 1,2-propanediol, 1,3-butanediol, 2,3-butanediol, 1,3-pentanediol, 1,2-hexanediol, 3-methylpentane-1,5-diol, 2,2-dimethyl-1,3-propanediol, diethylene glycol, dipropylene glycol and tripropylene glycol, and aromatic diols and propoxylated and/or ethoxylated products thereof. The cross-linkers are isocyanate-reactive compounds containing 3-8 isocyanate-reactive hydrogen atoms and, preferably, having an average equivalent weight of less than 150. Example of such cross-linkers are glycerol, trimethylolpropane, pentaerythritol, triethanolamine, polyoxyethylene polyols having an average nominal functionality of 3-8 and an average equivalent weight of less than 150 like ethoxylated glycerol, trimethylol propane and pentaerythritol having said equivalent weight, and polyether triamines having said equivalent weight.

Polyether polyamines may be selected from polyoxypropylene polyamines, polyoxyethylene polyamines and polyoxypropylene polyoxyethylene polyamines, preferably having an equivalent weight of 150-3000 (number average molecular weight divided by the number of amine groups at the end of the polymer claims). Such polyether polyamines are known in the art. Examples are Jeffamine® ED2003 and T5000 obtainable from Huntsman.

Still further the other isocyanate-reactive compounds may be selected from polyols which are polyesters, polyesteramides, polythioethers, polycarbonates, polyacetals, polyolefins, polysiloxanes or polyethers (different form polyol a)). Polyester polyols which may be used include hydroxyl-terminated reaction products of dihydric alcohols such as ethylene glycol, propylene glycol, diethylene glycol, 1,4-butanediol, neopentyl glycol, 1,6-hexanediol or cyclohexane dimethanol or mixtures of such dihydric alcohols, and dicarboxylic acids or their ester-forming derivatives, for example succinic, glutaric and adipic acids or their dimethyl esters, sebacic acid, phthalic anhydride, tetrachlorophthalic anhydride or dimethyl terephthalate or mixtures thereof. Polythioether polyols, which may be used, include products obtained by condensing thiodiglycol either alone or with other glycols, alkylene oxides, dicarboxylic acids, formaldehyde, amino-alcohols or aminocarboxylic acids. Polycarbonate polyols which may be used include products obtained by reacting diols such as 1,3-propanediol, 1,4-butanediol, 1,6-hexanediol, diethylene glycol or teraethylene glycol with diaryl carbonates, for example diphenyl carbonate, or with phosgene. Polyacetal polyols which may be used include those prepared by reacting glycols such as diethylene glycol, triethylene glycol or hexanediol with formaldehyde. Suitable polyacetals may also be prepared by polymerising cyclic acetals. Suitable polyolefin polyols include hydroxy-terminated butadiene homo- and copolymers and suitable polysiloxane polyols include polydimethylsiloxane diols.

Polyether polyols different from polyol a) have an EO content of less than 50% or more than 90% by weight and preferably have an average equivalent weight of 150-4000 and more preferably of 150-2500 and preferably have an average functionality of 2-4. Such polyols include polyoxyethylene polyoxypropylene polyols, wherein the oxyethylene and oxypropylene units are distributed randomly, in block form or a combination thereof, and polyoxypropylene polyols and/or polyoxyethylene polyols. Such polyols are widely known. Examples are Daltocel® F428 obtainable ex Huntsman and polyoxyethylene glycols having a molecular weight of 600 or 1000.

Mixtures of the aforementioned other isocyanate-reactive compounds may be used as well. Preferably the other isocyanate-reactive compounds are polyols selected from the above preferred ones.

The polyols may comprise dispersions or solutions of addition or condensation polymers in polyols of the types described above. Such modified polyols, often referred to as "polymer polyols" have been fully described in the prior art and include products obtained by the <u>in situ</u> polymerisation of one or more vinyl monomers, for example styrene and/or acrylonitrile, in the above polyether polyols, or by the <u>in situ</u> reaction between a polyisocyanate and an amino- and/or hydroxy-functional compound, such as triethanolamine, in the above polyol. Polyoxyalkylene polyols containing from 1 to 50% of dispersed polymer are particularly useful. Particle sizes of the dispersed polymer of less than 50 microns are preferred.

Still further the following optional ingredients may be used: catalysts enhancing the formation of urethane bonds like tin catalysts like tin octoate and dibutyltindilaurate, tertiary amine catalysts like triethylenediamine and imidazoles like dimethylimidazole and other catalysts like maleate esters and acetate esters; surfactants; foam stabilisers like siloxane-oxyalkylene copolymers; fire retardants; smoke suppressants; UV-stabilizers; colorants; microbial inhibitors; organic and inorganic fillers, impact modifiers, plasticizers and internal mould release agents. Further external mould release agents may be used in the process according to the present invention.

Any compound that catalyses the isocyanate trimerisation reaction (isocyanurate-formation) can be used as trimerisation catalyst in the process according to the present invention, such as tertiary amines, triazines and most preferably metal salt trimerisation catalysts.

Examples of suitable metal salt trimerisation catalysts are alkali metal salts of organic carboxylic acids. Preferred alkali metals are potassium and sodium, and preferred carboxylic acids are acetic acid and 2-ethylhexanoic acid. Most preferred metal salt trimerisation catalysts are potassium acetate (commercially available as Polycat 46 from Air Products and Catalyst LB from Huntsman Polyurethanes) and potassium 2-ethylhexanoate (commercially available as Dabco K15 from Air Products). Two or more different metal salt trimerisation catalysts can be used in the process of the present invention.

The metal salt trimerisation catalyst is generally used in an amount of up to 5% by weight based on the isocyanate-reactive composition, preferably 0.001 to 3% by weight. It may occur that the polyol used in the process according to the present invention still contains metal salt from its preparation which may then act as the trimerisation catalyst or as part of the trimerisation catalyst package.

The polyurethane material may be a solid or blown (microcellular) material. Microcellular materials are obtained by conducting the reaction in the presence of a blowing agent like hydrocarbons, hydrofluorocarbons, hydrochlorofluorocarbons, gases like $N_2$ and $CO_2$, and gas generating compounds like azodicarbonamide and water and mixtures thereof. The amount of blowing agent will depend on the desired density. Density reduction may also be achieved by the incorporation of expanded or expandable microspheres like Expancel® or hollow glass or metal microbeads.

The reaction to prepare the material is conducted at an NCO index of 150-5000 and preferably 150-4000.

The hardblock content is at most 49%, preferably 5-45% and more preferably 10-39%.

Most preferably the materials made according to the process according to the present invention have a hardblock content of 5-45 and preferably of 10-39 %, a Shore A hardness of 10-99 and preferably of 20-90 (DIN 53505) and an elongation of 5-1000 % and preferably of 10-1000 % (DIN 53504).

The materials are preferably made in a mould. The process may be conducted in any type of mould known in the art. Examples of such moulds are the moulds commercially used for making shoe parts like shoe soles and in-soles and automotive parts, like arm-rests, steering wheels, shock dampers, spring aids and dashboard skins.

Preferably the reaction is conducted in a closed mould. The ingredients used for making the material are fed into the mould at a temperature of from ambient temperature up to 90°C, the mould being kept at a temperature of from ambient temperature up to 150°C during the process. Demoulding time is relatively short despite the fact that preferably no isocyanate-reactive compounds, containing reactive amine groups, are used; depending on the amount of catalyst demould times may be below 10 minutes, preferably below 5 minutes, more preferably below 3 minutes and most preferably below 1 minute.

The moulding process may be conducted according to the reaction injection moulding (RIM) process and the cast moulding process. The process may also be conducted according to the RRIM (reinforced RIM) and SRIM (structural RIM) process.

In general, the isocyanate-reactive ingredients and catalysts may be pre-mixed, optionally together with the optional ingredients, before being brought into contact with the polyisocyanate.

The present invention is illustrated by the following examples.

Examples 1-2

0.025 %w of catalyst LB was mixed with Daltocel® F555, a polyol obtainable ex Huntsman having an equivalent weight of about 2000, a nominal functionality of 3 and which is a polyoxyethylene polyoxypropylene polyol having an oxyethylene content of about 75% by weight. This mixture was mixed with 4,4'-MDI under vacuum using a standard bench-vacuum mixer and poured in a 15x20 cm open-top aluminium mould which was treated with a standard polyurethane release agent. The mould was maintained at 80 °C. Demoulding took place after 1 hour. Mouldings were made at an index of 250 and 1250.

The materials had the following properties

| Index | 250 | 1250 |
|---|---|---|
| Ratio of polyol/polyisocyanate | 86.5/13.5 | 56.2/43.8 |
| Ball rebound, % | 75 | 50 |
| Shore A (DIN 53505) | 62 | 98 |
| Elongation, % (DIN 53504, at a speed of 500 mm/min) | 16.0 | 5.2 |

**Claims**

1. A process for preparing an elastomeric polyisocyanurate polyurethane material, which process comprises reacting a polyisocyanate and an isocyanate-reactive composition, wherein the reaction is conducted at an isocyanate index of 150 to 5000 and in the presence of a trimerisation catalyst, wherein the polyisocyanate comprises a) 80-100% by weight of diphenylmethane diisocyanate comprising at least 40% by weight of 4,4'-diphenylmethane diisocyanate and/or a variant of said diphenylmethane diisocyanate which variant is liquid at 25°C and has an NCO value of at least 20% by weight (polyisocyanate a), and b) 20-0% by weight of another polyisocyanate (polyisocyanate b), the amount of polyisocyanate a) and polyisocyanate b) being calculated on the total amount of this polyisocyanate a) and polyisocyanate b), and wherein the isocyanate-reactive composition comprises a) 80-100% by weight of a polyether polyol having an average nominal functionality of 2-6, an average equivalent weight of 1100-5000 and an oxyethylene (EO) content of 50-90% by weight, and b) 20-0% by weight of one or more other isocyanate-reactive compounds, the amount of polyol a) and compound b) being calculated on the total amount of this polyol a) and compound b), and wherein the hardblock content is at most 49%.

2. Process according to claim 1 wherein the index is 150-4000, the hardblock content is 5-45% and the equivalent weight is 1800-3500.

**3.** Process according to claims 1-2 wherein the oxyethylene content is 60-85 % by weight.

**4.** Process according to claims 1-3 wherein the oxyethylene content is 60-85 % by weight, the amount of polyol a) is 90-100 % by weight and the amount of compound b) is 0-10 % by weight.

**5.** Elastomeric polyisocyanurate polyurethane material made according to claims 1-4 and having a hardblock content of 5-45 %, a Shore A hardness of 10-99 (DIN 53505) and an elongation of 5-1000 % (DIN 53504).

**6.** Elastomeric polyisocyanurate polyurethane material according to claim 5 wherein the hardblock content is 10-39 %, the Shore A hardness is 20-90 and the elongation is 10-1000%.


**Patentansprüche**

**1.** Verfahren zur Herstellung eines elastomeren Polyisocyanurat-polyurethan-Materials, wobei das Verfahren Umsetzen eines Polyisocyanats und einer Isocyanat-reaktiven Zusammensetzung umfasst, wobei die Reaktion bei einem Isocyanatindex von 150 bis 5000 und in Gegenwart eines Trimerisierungskatalysators durchgeführt wird, wobei das Polyisocyanat a) 80-100 Gewichts-% Diphenylmethandiisocyanat, umfassend wenigstens 40 Gewichts-% 4,4'-Diphenylmethandiisocyanat und/oder einer Variante des Diphenylmethandiisocyanats, wobei diese Variante bei 25 °C flüssig ist und einen NCO-Wert von wenigstens 20 Gewichts-% hat, (Polyisocyanat a), und b) 20-0 Gewicht-% eines anderen Polyisocyanats, (Polyisocyanat b), umfasst, wobei die Gesamtmenge an Polyisocyanat a) und Polyisocyanat b) auf die Gesamtmenge dieses Polyisocyanats a) und Polyisocyanats b) berechnet ist, und wobei die Isocyanat-reaktive Zusammensetzung a) 80-100 Gewichts-% eines Polyetherpolyols, das eine durchschnittliche nominale Funktionalität von 2-6, ein durchschnittliches Äquivalentgewicht von 1100-5000 und einen Oxyethylen (EO)-Gehalt von 50-90 Gewichts-% hat, und b) 20-0 Gewichts-% eines oder mehrerer anderer Isocyanat-reaktiver Verbindungen umfasst, wobei die Menge an Polyol a) und Verbindung b) auf der Gesamtmenge dieses Polyols a) und dieser Verbindung b) errechnet ist, und wobei der Hartblockgehalt höchstens 49 % ist.

**2.** Verfahren nach Anspruch 1, wobei der Index 150-4000 ist, der Hartblockgehalt 5-45 % ist und das Äquivalentgewicht 1800-3500 ist.

**3.** Verfahren nach den Ansprüchen 1-2, wobei der Oxyethylen-Gehalt 60-85 Gewichts-% ist.

**4.** Verfahren nach den Ansprüchen 1-3, wobei der Oxyethylen-Gehalt 60-85 Gewichts-% ist, die Menge an Polyol a) 90-100 Gewichts-% ist und die Menge an Verbindung b) 0-10 Gewichts-% ist.

**5.** Elastomeres Polyisocyanurat-polyurethan-Material, hergestellt nach den Ansprüchen 1-4 und mit einem Hartblockgehalt von 5-45 %, einer Shore A-Härte von 10-99 (DIN 53505) und einer Dehnung von 5-1000 % (DIN 53504).

**6.** Elastomeres Polyisocyanurat-polyurethan-Material nach Anspruch 5, wobei der Hartblockgehalt 10-39 % ist, die Shore A-Härte 20-90 ist und die Dehnung 10-1000 % ist.


**Revendications**

**1.** Procédé pour la préparation d'une matière du type polyisocyanurate-polyuréthanne élastomère, procédé qui comprend la réaction d'un polyisocyanate et d'une composition réactive avec les isocyanates, dans lequel la réaction est conduite à un indice d'isocyanate de 150 à 5000 et en présence d'un catalyseur de trimérisation, dans lequel le polyisocyanate comprend a) 80 à 100 % en poids d'un diphénylméthane-diisocyanate comprenant au moins 40 % en poids de 4,4'-diphénylméthane-diisocyanate et/ou d'un variant dudit diphénylméthane-diisocyanate, variant qui est liquide à 25°C et qui a un indice de NCO d'au moins 20 % en poids (polyisocyanate a), et b) 20 à 0 % en poids d'un autre polyisocyanate (polyisocyanate b), la quantité de polyisocyanate a) et de polyisocyanate b) étant calculée sur la base de la quantité totale de ce polyisocyanate a) et de ce polyisocyanate b), et dans lequel la composition réactive avec les isocyanates comprend a) 80 à 100 % en poids d'un polyéther-polyol ayant une fonctionnalité nominale de 2 à 6, un poids équivalent moyen de 1100 à 5000 et une teneur en oxyéthylène (EO) de 50 à 90 % en poids, et b) 20 à 0 % en poids d'un ou plusieurs autres composés réactifs avec les isocyanates, la quantité de polyol a) et de composé b) étant calculée sur la base de la quantité totale de ce polyol a) et de ce composé b), et dans lequel la teneur en blocs durs est d'au plus 49 %.

**2.** Procédé suivant la revendication 1, dans lequel l'indice est compris dans l'intervalle de 150 à 4000, la teneur en blocs durs est comprise dans l'intervalle de 5 à 45 % et le poids équivalent est compris dans l'intervalle de 1800 à 3500.

**3.** Procédé suivant les revendications 1 et 2, dans lequel la teneur en oxyéthylène est comprise dans l'intervalle de 60 à 85 % en poids.

**4.** Procédé suivant les revendications 1 à 3, dans lequel la teneur en oxyéthylène est comprise dans l'intervalle de 60 à 85 % en poids, la quantité de polyol a) est comprise dans l'intervalle de 90 à 100 % en poids et la quantité de composé b) est comprise dans l'intervalle de 0 à 10 % en poids.

**5.** Matière du type polyisocyanurate-polyuréthanne élastomère préparée suivant les revendications 1 à 4 et ayant une teneur en blocs durs de 5 à 45 %, une dureté Shore A de 10 à 99 (DIN 53505) et un allongement de 5 à 1000 % (DIN 53504).

**6.** Matière du type polyisocyanurate-polyuréthanne élastomère suivant la revendication 5, dans laquelle la teneur en blocs durs est comprise dans l'intervalle de 10 à 39 %, la dureté Shore A est comprise dans l'intervalle de 20 à 90 et l'allongement est compris dans l'intervalle de 10 à 1000 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0206370 A
- WO 9800450 A
- EP 608626 A
- WO 0210249 A
- EP 922063 A
- WO 0029459 A
- WO 0200752 A
- EP 1173495 A
- EP 745627 A
- EP 587317 A
- US 4247656 A
- US 4129697 A
- DE 10145458
- US 4661533 A
- US 4424288 A
- US 4126742 A
- GB 1433642 A
- EP 1428848 A
- WO 05072188 A
- WO 04111101 A

**Non-patent literature cited in the description**

- **G. Woods.** The ICI Polyurethanes Book. 1990, 32-35